# EUROPÄISCHE PATENTSCHRIFT

(11) **EP 2 702 093 B1**
(45) Veröffentlichungstag und Bekanntmachung des Hinweises auf die Patenterteilung: **28.01.2015**
(21) Anmeldenummer: 12707278.3
(22) Anmeldetag: 01.03.2012
(51) Int. Cl.: C08J 7/04, C08J 5/04, F16G 1/28, F16G 5/20

(54) **ELASTISCHER ARTIKEL, INSBESONDERE ANTRIEBSRIEMEN, MIT EINER BESCHICHTUNG IN FORM EINES VLIESES AUS EINEM SCHMELZBAREN KUNSTSTOFF**
ELASTIC ARTICLE, IN PARTICULAR DRIVE BELT, HAVING A COATING IN THE FORM OF A FLEECE MADE OF A MELTABLE PLASTIC
ARTICLE ÉLASTIQUE, EN PARTICULIER COURROIE D'ENTRAÎNEMENT, COMPORTANT UN REVÊTEMENT EN FORME DE NON-TISSÉ EN MATIÈRE SYNTHÉTIQUE FUSIBLE

(30) Priorität: 27.04.2011 DE 102011002274
(43) Veröffentlichungstag der Anmeldung: 05.03.2014
(73) Patentinhaber: ContiTech Antriebssysteme GmbH, 30165 Hannover (DE)
(72) Erfinder: KANZOW, Henning, 30419 Hannover (DE); BALTES, Thomas, 30177 Hannover (DE); GREINER, Christian, 30167 Hannover (DE)
(74) Vertreter: Preusser, Andrea
(86) Internationale Anmeldenummer: PCT/EP2012/053494
(87) Internationale Veröffentlichungsnummer: WO 2012/146419

(56) Entgegenhaltungen:
- WO-A1-02/084144
- DE-A1-102008 055 497
- US-A1- 2010 075 793

## Beschreibung

Die Erfindung betrifft einen Artikel mit einem elastischen Grundkörper auf der Basis eines Vulkanisates mit einer verschleißanfälligen Artikeloberfläche, die mit einer Beschichtung versehen ist. Der elastische Grundkörper ist zumeist noch mit einem eingebetteten Festigkeitsträger bzw. Zugträger versehen, der ein- oder mehrlagig ausgeführt sein kann.

Ein Artikel, der dynamischen Belastungen und somit einem Verschleiß wie auch Geräuschentwicklungen ausgesetzt ist, ist beispielsweise ein Antriebsriemen, Fördergurt oder Luftfederbalg, wobei der Antriebsriemen von besonderer Bedeutung ist. Der elastische Grundkörper des Antriebsriemens umfasst dabei eine Decklage als Riemenrücken und einen Unterbau mit einer Kraftübertragungszone. Diesbezüglich wird insbesondere auf folgende Patentliteratur verwiesen: DE 38 23 157 A1, DE 44 00 434 A1, DE 100 16 351 A1, DE 10 2006 007 509 A1, DE 10 2010 060 216 A1, EP 1 431 358 A1, EP 1 818 567 A1, EP 2 101 079 A2, WO 02/084144 A1, WO 96/02584 A1, WO 2005/080821 A1, WO 2006/066669 A1, US 3 981 206, US 5 417 618, US 6 793 599 B2, US 6 824 485 B2 und US 2008/0207371 A1.

Antriebsriemen als schwerpunktmäßiger Einsatzbereich werden zur Geräuschreduzierung wie auch zur Erhöhung der Abriebsbeständigkeit insbesondere im Bereich der Kraftübertragungszone mit einer Beschichtung versehen. Der diesbezügliche Stand der Technik ist:
- Eingesetzt wird eine Flockauflage (DE 100 16 351 A1), insbesondere in Form eines Baumwoll- oder Aramidflocks, oder eine dünne mit Fasern (z.B. Aramidfasern) gefüllte elastische Polymerschicht, beispielsweise nach der Offenlegungsschrift DE 38 23 157 A1, wobei die Anhaftung der Flockauflage zumeist mittels einer Lösung erfolgt. Bei manchen Motoren wirkt jedoch diese Beschichtung nicht dauerhaft. Außerdem treten hier bei manchen Motoren Geräuschprobleme bei Feuchtigkeit auf.

- In der Offenlegungsschrift DE 44 00 434 A1 wird eine Beschichtung aus vernetztem Fluorpolymeranteil beschrieben. Nachteilig ist, dass die Beschichtung auf manchen Motoren nicht dauerhaft ist, verbunden mit einem Verlust der Funktion durch Verschleiß. Außerdem reagiert der Sprühprozess empfindlich auf die Änderung von Umgebungsbedingungen (Luftfeuchte, Temperatur). Darüber hinaus behindert die Zeit für Lacktrocknung einen effizienten Herstellungsprozess.
- Aus der Offenlegungsschrift EP 1 431 358 A1 ist eine Lackbeschichtung auf Acrylat- und Polyurethanbasis bekannt. Diese Beschichtung ist ebenfalls auf manchen Motoren nicht dauerhaft, verbunden mit einem Verlust der Funktion durch Verschleiß. Darüber hinaus behindert auch hier die Zeit für die Lacktrocknung einen effizienten Herstellungsprozess.
- Verwendet wird eine gestrickte Textilauflage, beispielsweise nach der Patentschrift US 3 981 206. Der Nachteil ist hier, dass auf Prüfmotoren bei Feuchtigkeit Geräusche entstehen.
- Verwendet wird eine Textilauflage in Form eines Gewirkes. Diesbezüglich wird insbesondere auf die Offenlegungsschrift DE 10 2006 007 509 A1 verwiesen. Die Kettwirkware besteht dabei aus einem ersten Garn, insbesondere aus einem Polyamid (PA) oder Polyester (PES), und aus einem zweiten Garn, insbesondere aus einem Polyurethan (PU). Nachteilig ist auch hier, dass auf Prüfmotoren bei Feuchtigkeit ebenfalls Geräusche entstehen.
- Die Textilauflage ist ein PA6.6-Strechgewebe und wird insbesondere bei Zahnriemen verwendet, wobei hier insbesondere die Offenlegungsschrift EP 1 818 567 A1 zu nennen ist. Ein PA6.6-Strechgewebe ist jedoch relativ teuer.

- Aus der Offenlegungsschrift WO 02/084144 A1 ist bekannt, einen Zahnriemen mit einer thermoplastischen Oberflächenschicht zu versehen, wobei insbesondere PA eingesetzt wird.
- In der Offenlegungsschrift WO2005/080821 A1 wird ein Zahnriemen beschrieben, dessen Decklage und Kraftübertragungszone mit einer Textilauflage versehen ist, wobei wiederum die Textilauflage mit einem ölbeständigen Kunststoff präpariert ist. Als Kunststoff wird dabei ein Fluorkunststoff, beispielsweise Polytetrafluorethylen (PTFE), eingesetzt.
- Für manche PU-Riemen wird ein Gewebe als Textilauflage, insbesondere aus PA6.6, verwendet, bei dem eine Folie, beispielsweise eine Polyethylenfolie, außen auf die Gewebeauflage aufgebracht wird. Die Folie ist jedoch ein Verfahrenshilfsmittel. Bei der Ausformung der Zähne mit dem Gieß-PU wird verhindert, dass das flüssige PU durch das Gewebe fließt. Das Gewebe vernetzt aber nicht mit dem PU und hat keine sonstige Funktion. Zum Stand der Technik von PU-Riemen wird beispielsweise auf die Offenlegungsschrift WO 96/02584 A1 verwiesen.
- In der Patentschrift US 6 793 599 B2 wird eine Vliesbeschichtung vorgestellt. Klassische Vliese aus bei Vulkanisationsbedingungen nicht schmelzenden Materialien zeigen eine schlechte Abriebbeständigkeit, weswegen der Einsatz auf den Reibflächen als Verschleißschutz bei reibschlüssigen Antriebsriemen bei den meisten Anwendungen, beispielsweise beim Keilrippenriemen für KFZ-Anwendung, nicht ausreicht. Klassische Vliese sind ferner nicht ausreichend elastisch, um insbesondere das Ausformen von Keilrippenriemen im Formverfahren zu ermöglichen. Der dadurch hervorgerufene Vulkanisatdurchtritt kann das positive Geräuschverhalten verschlechtern.
- Aus der Patentschrift US 6 824 485 B2 ist eine Vliesbeschichtung mit zusätzlich eingelagertem Gleitmittel bekannt. Hinsichtlich der Nachteile gilt hier das gleiche, was bereits in Verbindung mit der Patentschrift US 6 793 599 B2 dargelegt wurde.
- Nach einer Entwicklung gemäß DE 10 2008 012 044 A1 werden anstelle der Textilauflagen oder in Kombination mit diesen eine Folie (z.B. PTFE-Folie) oder ein Folienverbund (z.B. PA-PTFE-Folienverbund) eingesetzt, insbesondere unter dem Aspekt der ölbeständigen Ausrüstung eines Antriebsriemens. In diesem Zusammenhang wird ferner auf die Offenlegungsschrift US 2008/0207371 A1 verwiesen, wo ein Antriebsriemen, insbesondere ein Keilrippenriemen, mit einer Beschichtung in Form eines Films oder Folie aus einem thermoplastischen Kunststoff offenbart wird. Diese Beschichtung führt im Formverfahren bei der Herstellung von Keilrippenriemen zu Ausformproblemen.
- In der Offenlegungsschrift DE 10 2008 055 497 A1 wird ein Artikel, insbesondere ein Antriebsriemen, vorgestellt, wobei die Beschichtung eine Textilauflage aus einem Gewebe, Gewirke, Gestrick oder Vlies ist. Zwischen dem Grundkörper auf der Basis eines Vulkanisats und der Textilauflage ist ein Haftvermittler aus einem Kunststoff angeordnet, wobei der Kunststoff derart beschaffen ist, dass dieser bei der Vulkanisation schmilzt und dabei unter Mitvernetzung in die Textilauflage eindringt, verbunden mit einem dauerfesten Haftverbund von Grundkörper und Textilauflage. Der Haftvermittler ist beispielsweise eine Folie aus Polyethylen (PE).
- Die Beschichtung ist eine Reaktionsmasse, wobei ein Isocyanat mit wenigstens zwei NCO-Gruppen mit Wasser und/oder einem Diol und/oder einem Polyol zu einem Polymerisat ausreagiert. Diesbezüglich wird insbesondere auf die Entwicklung gemäß EP 2 101 079 A2 verwiesen.

Die Vielzahl der Lösungsansätze für Beschichtungen von Antriebsriemen zeigt, dass die diesbezügliche Entwicklung noch nicht abgeschlossen ist. Bei anderen Artikeln mit einer verschleißanfälligen Oberfläche, beispielsweise bei Fördergurten und Luftfederbälgen, gibt es bislang weitaus weniger Entwicklungsbeiträge mit zufriedenstellenden Lösungsansätzen.

Im Rahmen einer Weiterentwicklung besteht die Aufgabe der Erfindung darin, einen Artikel mit Beschichtung der eingangs genannten Art bereitzustellen, bei dem eine Kombination aus dauerhaftem Verschleißschutz auch bei einem hohen Reibbeiwert (CoF > 2) und Geräuschdämmung, insbesondere bei Nassgeräuschen, bei gleichzeitig verbesserter Haftung der Beschichtung zum Grundkörper gewährleistet ist. Darüber hinaus soll eine einfache Beschichtungsherstellung realisiert werden, und zwar unter Verzicht auf Lösemittel und bei keinen Ablüftzeiten für Trockenprozesse sowie bei einer guten Luftabführung bei der Vulkanisation.

Gelöst wird diese Aufgabe dadurch, dass die Beschichtung ausschließlich aus einem Vlies aus einem Kunststoff besteht, wobei der Kunststoff derart beschaffen ist, dass dieser bei der Vulkanisation schmilzt und dabei einen festen Haftverbund von Grundkörper und Beschichtung bildet.

Das neue Beschichtungskonzept auf der Basis eines schmelzenden Vlieses kommt insbesondere bei der Herstellung folgender Artikel zur Anwendung:
- Antriebsriemen
   Von besonderer Bedeutung ist der Antriebsriemen, der konstruktiv als Flachriemen, Keilriemen, Keilrippenriemen oder Zahnriemen ausgebildet sein kann. Sein Einsatz erstreckt sich auf den Fahrzeug- und Maschinenbau. Auch bei Aufzügen spielt er eine besondere Bedeutung. Eine zunehmend herausragende Bedeutung hat dabei der Keilriemen sowie insbesondere der Keilrippenriemen.
   Besonders verschleißanfällig ist die Kraftübertragungszone, da dort der Riementrieb wirkt. Im Rahmen des neuen Beschichtungskonzeptes ist es wichtig, dass zumindest die Kraftübertragungszone mit einer Beschichtung versehen ist, die ausschließlich aus einem Schmelz-Vlies besteht. Insbesondere bei Schiefstellungsgeräuschen zeigt das neue Beschichtungskonzept seine positive Wirkung.
   Der Riemenrücken kann gegebenenfalls ebenfalls mit dieser neuen Beschichtung versehen werden.
   Bei der Endlosschließung eines Antriebsriemens kann zwischen den Stoßenden der Vliesbeschichtung eine Lücke von 0 bis 7 mm gelassen werden. Bei Vliesen mit niedrigem Flächengewicht (< 40 g/m²) können die Vliesenden auch überlappend ausgeführt werden. Alternativ kann das Vlies auch mehrlagig aufgebracht werden.
- Fördergurt
   Ein Fördergurt umfasst eine tragseitige und laufseitige Deckplatte, wobei sämtliche Oberflächen verschleißanfällig sind. Bei der tragseitigen Deckplatte wird der Verschleiß durch das Fördermaterial, beispielsweise durch scharfkantige Erze, sowie bei der laufseitigen Deckplatte durch die Trommeln (Antriebstrommel, Umkehrtrommel, Umlenktrommel) sowie durch die Tragrollen hervorgerufen.
   Die neue Beschichtung in Form eines Schmelz-Vlieses erfasst hier vorzugsweise die tragseitige und laufseitige Deckplatte.
- Schlauch
   Ein Schlauch ist ein mehrschichtiges Gebilde, umfassend eine verschleißanfällige Außenschicht und eine Innenschicht, die primär medienbeständig sein muss. Bei Transport von Gasen ist zudem eine Gasdiffusion zu verhindern. Die Verschleißanfälligkeit der Außenschicht ist insbesondere bei Großschläuchen, beispielsweise Schwimmschläuchen von Off-Shore-Anlagen, relevant. Bei einem Schlauch wird daher ausschließlich die Außenschicht mit der neuen Beschichtung aus einem Schmelz-Vlies ausgestattet.
   Für die Innenschicht (Inliner) sind spezielle medienbeständige wie auch gasundurchlässige Werkstoffe entwickelt worden. Diesbezüglich wird auf den umfassenden Stand der Schlauchtechnik verwiesen.
- Luftfederbalg
   Ein Luftfederbalg (Axialbalg, Kreuzlagenbalg) umfasst ebenfalls eine Außenschicht und Innenschicht. Dabei unterliegt die Außenschicht im Rahmen der Ein- und Ausfederung einem permanenten Verschleiß.
   Die Außenschicht eines Luftfederbalges kann nun mit der neuen Beschichtung in Form eines Schmelz-Vlieses ausgestattet werden.
- Mehrschichtige Stoffbahn
   Eine mehrschichtige Stoffbahn dient beispielsweise zur Bildung von Schutzanzügen, Zelten, Rettungsinseln und Übergangsbälgen. Bei Schutzanzügen, Zelten, Planen und Rettungsinseln ist die Außenschicht einem Verschleiß ausgesetzt. Hier ist es ausreichend, wenn nur die Außenschicht mit dem Schmelz-Vlies ausgestattet wird. Bei den zumeist faltenförmigen Übergangsbälgen (Fluggastbrücken, Übergangsbälge für Bahnen und Busse) ist es dagegen von Vorteil, wenn nicht nur die Außenschicht, sondern auch die Innenschicht mit der neuen Beschichtung versehen wird.

Im Folgenden wird auf vorteilhafte Werkstoff- und Gestaltungsvarianten des Schmelz-Vlieses eingegangen.
- Der Kunststoff des Vlieses ist bevorzugt ein Polyethylen (PE) oder ein Polypropylen (PP). Von besonderer Bedeutung wiederum ist ein Polyethylen niedriger Dichte (LDPE) oder ein Polyolefin hoher Dichte (HDPE). Eine herausragende Bedeutung hat dabei HDPE.
- Das Vlies kann auch ein Kunststoffgemisch auf der Basis von PE, LDPE, HDPE oder PP sein, beispielsweise ein HDPE/PP-Gemisch, wobei der Anteil an PE, LDPE, HDPE oder PP wenigstens 40 Gew.-%, insbesondere wenigstens 80 Gew.-%, beträgt. Diese Angaben beziehen sich auf die jeweilige Basiskomponente eines Kunststoffgemisches. Bildet beispielsweise in einem HDPE/PP-Gemisch das HDPE die Basiskomponente, dann sind die oben genannten Mengenangaben auf das HDPE anzuwenden, beispielsweise ein Gemisch aus 85 Gew.-% HDPE und 15 Gew.-% PP. Von besonderer Bedeutung ist jedoch der artenreine Kunststoff.
- Das Flächengewicht des Vlieses beträgt 5 bis 80 g/m² auf, insbesondere 5 bis 40 g/m², insbesondere wiederum 10 bis 30 g/m². Diesbezügliche Beispiele sind:
   LDPE-Vlies mit 30 g/m2
   HDPE-Vlies mit 40 g/m²
   PP-Vlies mit 30 g/m²
- Darüber hinaus besteht die Möglichkeit, in den Kunststoff des Vlieses zusätzlich Partikel einzuarbeiten, insbesondere unter dem Aspekt der Reibbeiwertssenkung sowie der Beständigkeit gegenüber Chemikalien, Öle und Hitze. Diese Partikel können aus Silicon und/oder Polyurethan und/oder aus einem fluorhaltigen Kunststoff bestehen. Zu nennen sind als fluorhaltige Kunststoffe insbesondere Polyvinylfluorid (PVF), Polyvinylidenfluorid (PVDF) und Polytetrafluorethylen (PTFE). Von besonderer Bedeutung ist dabei PTFE. Auch Graphit oder Molybdänsulfid (MoS) kann eingemischt sein.
- Das Vlies besitzt eine Stärke von 0,01 bis 2 mm, insbesondere 0,05 bis 1 mm, insbesondere wiederum 0,1 bis 0,6 mm.
- Der Grundkörper ist zumeist ein Vulkanisat auf der Basis einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluorkautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder HNBR oder ein Verschnitt der vorgenannten Kautschuktypen. Die vorgenannten Kautschuktypen kommen insbesondere bei Antriebsriemen zu Einsatz. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.
- Das Vulkanisat ist insbesondere peroxidisch vernetzt, was in Verbindung mit der Kautschukmischung der oben genannten Art etwas näher erläutert wird. Die üblichen Vulkanisationstemperaturen liegen bei 130 bis 200 °C. Der schmelzende Kunststoff der Folie oder des Vlieses, beispielsweise PE, vermischt sich teilweise mit der in Kontakt stehenden Kautschukmischung und wird durch die Peroxide mitvernetzt, wodurch ein fester Verbund zwischen der Kautschukmischung und der Textilauflage entsteht. Die Vernetzung des geschmolzenen Vlieses wird insbesondere auch dadurch begünstigt, dass Peroxide aus dem Vulkanisat in die Vliesschicht eindiffundieren.
   In diesem Zusammenhang ist es von Vorteil, wenn das Vlies vor der Vulkanisation 0,5 bis 5 Gew.-%, insbesondere 1 bis 4 Gew.-%, eines Peroxides enthält. So wird die peroxidische Vernetzung des Vlieses verstärkt.

Im Folgenden wird nun eine Versuchsreihe anhand eines Keilrippenriemens mit PE-Vlies beschrieben.

Es wurden sechs Keilrippenriemen (6PK1335) mit jeweils sechs verschiedenen PE-Vliesstoffen mit den Gewichten (80, 60, 50, 40, 30 und 20 g/m²) auf einer Unterbaumischung im Formverfahren aufgebaut. Die Unterbaumischung bestand dabei jeweils aus einem peroxidisch vernetzten EPDM. Die diesbezüglichen Ergebnisse waren:
- In den Bereichen der Vliesstoffe war die Ausformung ideal.
- In den Bereichen ohne Vlies waren die Rippen nicht vollständig ausgeformt.
- Aus den Vliesen bildete sich in der Vulkanisation eine feste durchgängige Beschichtung auf den Rippen.
- Im Kältetest bei -40°C zeigten die Vliese (80, 60, 50 g/m²) leichte Anbrüche. Vliese (40 g/m²) zeigten hingegen nur minimale Beschädigungen. Bei den Vliesen (30, 20 g/m²) wurden keine Beschädigungen festgestellt.
- Die Riemen wurden auf Abrieb mit einem Dieselmotor getestet. Es wurde dabei kaum Abrieb in den Vliesbereichen beobachtet, allenfalls nur geringe Laufspuren.
- Mit den Riemen wurde auch eine Laufzeit auf einem 5-Scheibenprüfstand bei einer Umgebungstemperatur von 130°C bei > 200 Stunden mit nur einem Anbruch erreicht.

Eine Untersuchung mit verschiedenen PE-Typen hat ferner gezeigt, dass ein HDPE-Vlies die besten Eigenschaften bezüglich Geräuschen und Abriebverhalten aufweist.

Insbesondere bei einem Antriebsriemen, insbesondere wiederum bei einem Keilrippenriemen, kommen bei dem neunen Beschichtungskonzept folgende Vorteile besonders zur Geltung:
- Artikeltechnische Vorteile
   Hohe Leistungsübertragung bei gleichzeitiger Unterdrückung von Laufgeräuschen
   Hoher Verschleißschutz, dadurch konstante Reibverhältnisse und hohe Lebensdauer Guter Verschleißschutz bei Staub- und Schlammbelastung
   Einsatz auch bei sehr niedrigen Temperaturen möglich, bedingt durch ausreichende Kälteflexibilität bis < -40°C
   Hohe Biegeermüdungsresistenz, verbunden mit einer hohen Betriebsdauer
- Finanzielle Vorteile
   Einsatz von kostengünstigen Materialien wie PE, im Gegensatz zu einer teuren PU-PTFE-Beschichtung sowie teuren Gestricken oder Geweben Keine aufwendigen Fasermischungen
- Produktionstechnische Vorteile
   Umweltfreundich unter Verzicht von Lösungsmitteln
   Rohwickel benötigen keine Ablüftzeiten
   Keine unsicheren Lackierprozesse
   Sehr gute Reproduzierbarkeit
   Saubere Produktion, da kein Textilflock notwendig wie bei Lackbeschichtungen ist

Die Erfindung wird nun anhand eines Ausführungsbeispiels unter Bezugnahme auf eine schematische Zeichnung erläutert.

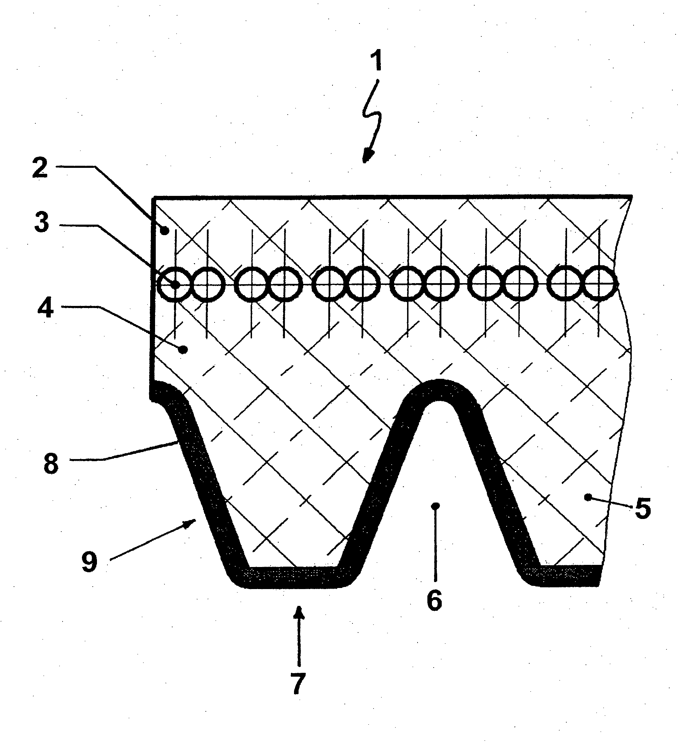

Die einzige Figur zeigt einen Antriebsriemen 1, der als Keilrippenriemen ausgebildet ist, mit einer Decklage 2 als Riemenrücken, einer Festigkeitsträgerlage mit in Längrichtung verlaufenden parallel angeordneten Zugträgern 3 in Form von Einzelcorden sowie mit einem Unterbau 4. Die Decklage und der Unterbau bilden den elastischen Grundkörper auf der Basis eines Vulkanisates, beispielsweise auf der Basis von EPDM. Der Unterbau weist eine Keilrippenstruktur auf, gebildet aus Rippen 5 und Rillen 6. Der Unterbau umfasst dabei die Kraftübertragungszone 9.

Die Beschichtung 8, die hier ausschließlich die Kraftübertragungszone 9 und die Rippenköpfe 7 erfasst, besteht ausschließlich aus einem Vlies, insbesondere einem HDPE-Vlies. Das Vlies wird dabei vor der Konfektion auf die Unterbaumischung aufgebracht.

Die Zugträger 3 bestehen beispielsweise aus Stahl, Polyamid, Aramid, Glasfasern, Kohlefasern, Basaltfasern, Polyethylentherephthalat (PET), Polyetheretherketon (PEEK) oder Polyethylen-2,6-naphthalat (PEN).

Die Decklage 2 kann frei von einer Vlies-Beschichtung sein oder ebenfalls mit einem derartigen Beschichtungskonzept versehen sein. Die Beschichtung für die Decklage 2 kann beispielsweise auch aus einer Textilauflage nach dem Stand der Technik gebildet sein.

### Bezugszeichenliste

### (Teil der Beschreibung)

- 1: Antriebsriemen (Keilrippenriemen)
- 2: Decklage (Riemenrücken)
- 3: Zugträger in Form von Einzelcorden
- 4: Unterbau
- 5: Rippen
- 6: Rillen
- 7: Rippenköpfe
- 8: Beschichtung in Form eines Vlieses
- 9: Kraftübertragungszone

## Patentansprüche

1. Artikel mit einem elastischen Grundkörper auf der Basis eines Vulkanisates mit einer verschleißanfälligen Artikeloberfläche, die mit einer Beschichtung (8) versehen ist, **dadurch gekennzeichnet, dass** die Beschichtung (8) ausschließlich aus einem Vlies aus einem Kunststoff besteht, wobei der Kunststoff derart beschaffen ist, dass dieser bei der Vulkanisation schmilzt und dabei einen festen Haftverbund von Grundkörper und Beschichtung bildet.

2. Artikel nach Anspruch 1, **dadurch gekennzeichnet, dass** dieser ein Antriebsriemen (1), Fördergurt, Schlauch, Luftfederbalg oder eine mehrschichtige Stoffbahn ist.

3. Artikel mit einem elastischen Grundkörper auf der Basis eines Vulkanisates mit einer verschleißanfälligen Artikeloberfläche, wobei der Artikel ein Antriebsriemen (1) ist, umfassend eine Decklage (2) als Riemenrücken und einen Unterbau (4) mit einer Kraftübertragungszone (9), wobei wenigstens die Kraftübertragungszone mit einer Beschichtung (8) versehen ist, **dadurch gekennzeichnet, dass** die Beschichtung (8) der Kraftübertragungszone (9) ausschließlich einem Vlies aus einem Kunststoff besteht, wobei der Kunststoff derart beschaffen ist, dass dieser bei der Vulkanisation schmilzt und dabei einen festen Haftverbund von Grundkörper und Beschichtung bildet.

4. Artikel nach Anspruch 3, **dadurch gekennzeichnet, dass** dieser ein Keilriemen oder Keilrippenriemen (1) ist.

5. Artikel nach einem der Ansprüche 1 bis 4, **dadurch gekennzeichnet, dass** der Kunststoff des Vlieses ein Polyethylen (PE) oder Polypropylen (PP) ist oder das Vlies ein Kunststoffgemisch auf der Basis von PE oder PP ist.

6. Artikel nach Anspruch 5, **dadurch gekennzeichnet, dass** der Kunststoff des Vlieses ein Polyethylen niedriger Dichte (LDPE) oder ein Polyethylen hoher Dichte (HDPE) ist oder das Vlies ein Kunststoffgemisch auf der Basis von LDPE oder HDPE ist.

7. Artikel nach Anspruch 5 oder 6, **dadurch gekennzeichnet, dass** bei einem Kunststoffgemisch der Anteil an PE, LDPE, HDPE oder PP wenigstens 40 Gew.-% beträgt, und zwar bezogen die Basiskomponente des Kunststoffgemisches.

8. Artikel nach Anspruch 7, **dadurch gekennzeichnet, dass** bei einem Kunststoffgemisch der Anteil an PE, LDPE, HDPE oder PP wenigstens 80 Gew.-% beträgt

9. Artikel nach einem der Ansprüche 1 bis 8, **dadurch gekennzeichnet, dass** das Flächengewicht des Vlieses 5 bis 80 g/m² beträgt.

10. Artikel nach einem der Ansprüche 1 bis 9, **dadurch gekennzeichnet, dass** in das Vlies zusätzlich Partikel eingearbeitet sind, insbesondere unter dem Aspekt der Reibbeiwertssenkung sowie der Beständigkeit gegenüber Chemikalien, Ölen und Hitze.

11. Artikel nach einem der Ansprüche 1 bis 10, **dadurch gekennzeichnet, dass** das unvulkanisierte Vlies eine Stärke von 0,01 bis 2 mm besitzt.

12. Artikel nach einem der Ansprüche 1 bis 11, **dadurch gekennzeichnet, dass** der elastische Grundkörper ein Vulkanisat auf der Basis einer vulkanisierten Kautschukmischung ist, enthaltend wenigstens eine Kautschukkomponente und Mischungsingredienzien.

13. Artikel nach einem der Ansprüche 1 bis 12, **dadurch gekennzeichnet, dass** das Vulkanisat peroxidisch vernetzt ist.

14. Artikel nach einem der Ansprüche 1 bis 13, **dadurch gekennzeichnet, dass** das Vlies peroxidisch vernetzt ist.

15. Artikel nach einem der Ansprüche 1 bis 14, **dadurch gekennzeichnet, dass** das Vlies von Vulkanisatbestandteilen vernetzt ist.

## Claims

1. Article having an elastic main body based on a vulcanizate having a wear-susceptible article surface having a coating (8), **characterized in that** the coating (8) consists exclusively of a nonwoven fabric comprising a polymer, wherein the polymer is constituted such that it melts in the course of vulcanization to form a firmly adhered combination of main body and coating.

2. Article according to Claim 1, **characterized in that** this article is a drive belt (1), a conveyor belt, a hose, an air spring lobe or a multilayered web.

3. Article having an elastic main body based on a vulcanizate having a wear-susceptible article surface, wherein the article is a drive belt (1) comprising a top ply (2) as belt spine and a substructure (4) having a force transmission zone (9), wherein at least the force transmission zone has a coating (8), **characterized in that** the coating (8) of the force transmission zone (9) consists exclusively of a nonwoven fabric comprising a polymer, wherein the polymer is constituted such that it melts in the course of vulcanization to form a firmly adhered combination of main body and coating.

4. Article according to Claim 3, **characterized in that** this article is a V-belt or a V-ribbed belt (1).

5. Article according to any of Claims 1 to 4, **characterized in that** the polymer of the nonwoven fabric is a polyethylene (PE) or polypropylene (PP) or the nonwoven fabric is a polymer blend based on PE or PP.

6. Article according to Claim 5, **characterized in that** the polymer of the nonwoven fabric is a low density polyethylene (LDPE) or a high density polyethylene (HDPE) or the nonwoven fabric is a polymer blend based on LDPE or HDPE.

7. Article according to Claim 5 or 6, **characterized in that** the proportion of PE, LDPE, HDPE or PP in a polymer blend is at least 40 wt%, based on the base component of the polymer blend.

8. Article according to Claim 7, **characterized in that** the proportion of PE, LDPE, HDPE or PP in a polymer blend is at least 80 wt%.

9. Article according to any of Claims 1 to 8, **characterized in that** the basis weight of the nonwoven fabric is in the range from 5 to 80 g/m².

10. Article according to any of Claims 1 to 9, **characterized in that** the nonwoven fabric further comprises particles incorporated therein particularly with an eye to a reduced coefficient of friction and to resistance with regard to chemicals, oils and heat.

11. Article according to any of Claims 1 to 10, **characterized in that** the nonwoven fabric is from 0.01 to 2 mm thick in the unvulcanized state.

12. Article according to any of Claims 1 to 11, **characterized in that** the elastic main body is a vulcanizate based on a vulcanized mixture of rubber, comprising at least one rubber component and mixture ingredients.

13. Article according to any of Claims 1 to 12, **characterized in that** the vulcanizate is a peroxidically crosslinked vulcanizate.

14. Article according to any of Claims 1 to 13, **characterized in that** the nonwoven fabric is a peroxidically crosslinked nonwoven fabric.

15. Article according to any of Claims 1 to 14, **characterized in that** the nonwoven fabric is a nonwoven fabric crosslinked by vulcanizate constituents.

## Revendications

1. Article comportant un corps de base élastique à base d'un vulcanisat avec une surface d'article sensible à l'usure, qui est munie d'un revêtement (8), **caractérisé en ce que** le revêtement (8) est composé exclusivement de non-tissé en une matière synthétique, dans lequel la matière synthétique est constituée d'une manière telle qu'elle fonde lors de la vulcanisation et forme de ce fait une liaison adhérente résistante du corps de base avec le revêtement.

2. Article selon la revendication 1, **caractérisé en ce que** celui-ci est une courroie d'entraînement (1), une courroie transporteuse, un tuyau flexible, un soufflet d'amortisseur pneumatique ou une bande de matière multicouche.

3. Article comportant un corps de base élastique à base d'un vulcanisat avec une surface sensible à l'usure, dans lequel l'article est une courroie d'entraînement (1), comprenant une couche de recouvrement (2) comme dos de courroie et une carcasse (4) avec une zone de transmission de force (9), dans lequel au moins la zone de transmission de force est munie d'un revêtement (8), **caractérisé en ce que** le revêtement (8) de la zone de transmission de force (9) est composé exclusivement de non-tissé en une matière synthétique, dans lequel la matière synthétique est constituée de telle manière que celle-ci fonde lors de la vulcanisation et forme de ce fait une liaison adhérente solide du corps de base avec le revêtement.

4. Article selon la revendication 3, **caractérisé en ce que** celui-ci est une courroie trapézoïdale ou une courroie trapézoïdale crantée (1).

5. Article selon l'une quelconque des revendications 1 à 4, **caractérisé en ce que** la matière synthétique du non-tissé est un polyéthylène (PE) ou un polypropylène (PP) ou le non-tissé est un mélange de matières synthétiques à base de PE ou de PP.

6. Article selon la revendication 5, **caractérisé en ce que** la matière synthétique du non-tissé est un polyéthylène à faible densité (LDPE) ou un polyéthylène à haute densité (HDPE) ou le non-tissé est un mélange de matières synthétiques à base de LDPE ou de HDPE

7. Article selon la revendication 5 ou 6, **caractérisé en ce que**, dans un mélange de matières synthétiques, la proportion de PE, LDPE, HDPE ou PP vaut au moins 40 % en poids, notamment par rapport au composant de base du mélange de matières synthétiques.

8. Article selon la revendication 7, **caractérisé en ce que**, dans un mélange de matières synthétiques, la proportion de PE, LDPE, HDPE ou PP vaut au moins 80 % en poids.

9. Article selon l'une quelconque des revendications 1 à 8, **caractérisé en ce que** le grammage du non-tissé vaut 5 à 80 g/m².

10. Article selon l'une quelconque des revendications 1 à 9, **caractérisé en ce que** des particules sont en outre incorporées dans le non-tissé, en particulier sous l'aspect d'une diminution du coefficient de frottement ainsi que de la résistance à l'égard des produits chimiques, des huiles et de la chaleur.

11. Article selon l'une quelconque des revendications 1 à 10, **caractérisé en ce que** le non-tissé non vulcanisé présente une épaisseur de 0,01 à 2 mm.

12. Article selon l'une quelconque des revendications 1 à 11, **caractérisé en ce que** le corps de base élastique est un vulcanisat à base d'un mélange de caoutchouc vulcanisé, contenant au moins un composant de caoutchouc et des ingrédients de mélange.

13. Article selon l'une quelconque des revendications 1 à 12, **caractérisé en ce que** le vulcanisat est réticulé par le peroxyde.

14. Article selon l'une quelconque des revendications 1 à 13, **caractérisé en ce que** le non-tissé est réticulé par le peroxyde.

15. Article selon l'une quelconque des revendications 1 à 14, **caractérisé en ce que** le non-tissé est réticulé par des composants de vulcanisat.
